# EUROPÄISCHE PATENTSCHRIFT

(11) **EP 1 188 145 B1**
(45) Veröffentlichungstag und Bekanntmachung des Hinweises auf die Patenterteilung: **08.09.2004**
(21) Anmeldenummer: 00920474.4
(22) Anmeldetag: 03.03.2000
(51) Int. Cl.: G06K 19/077

(54) **NICHTÜBERTRAGBARER BERECHTIGUNGSAUSWEIS**
NON-TRANSFERABLE ACCESS CARD
JUSTIFICATIF D'AUTORISATION NON TRANSMISSIBLE

(30) Priorität: 10.03.1999 DE 19910480
(43) Veröffentlichungstag der Anmeldung: 20.03.2002
(73) Patentinhaber: SkiData AG, 5083 Gartenau (AT)
(72) Erfinder: LIPPERT, Johannes, A-5360 St. Wolfgang (AT)
(74) Vertreter: Berngruber, Otto, Dr. Dipl.-Chem.
(86) Internationale Anmeldenummer: PCT/EP2000/001889
(87) Internationale Veröffentlichungsnummer: WO 2000/054216

(56) Entgegenhaltungen:
- EP-A- 0 595 549
- WO-A-93/12513
- US-B- 3 662 480

## Beschreibung

Die Erfindung bezieht auf einen nichtübertragbaren Berechtigungsausweis mit einem berührungslos les- und beschreibbaren Chip nach dem oberbegriff des Anspruchs 1.

Ein derartiger Berechtigungsausweis ist bekannt (WO 96/11451). Er wird durch eine Karte gebildet, die ein Loch aufweist. Als Verbindungselement wird beispielsweise ein Kunststoffband verwendet, das durch dieses Loch und beispielsweise die Öse an einem Reißverschlußschieber gesteckt wird. Damit der Berechtigungsausweis nicht vom Reißverschluß gelöst und damit an der Kleidung einer nicht berechtigten Person befestigt werden kann, werden bei der bekannten Berechtigungskarte die Enden des Kunststoffbandes beispielsweise durch einen Verriegelungsmechanismus z. B. ähnlich einem Kabelbinder unlösbar miteinander verbunden, also derart, dass es nach dem Öffnen zerstört wird. Personen, die solche noch nicht verriegelte Kunststoffbänder besitzen, können die bekannte nicht übertragbare Karte jedoch leicht dadurch mißbrauchen, dass sie das am Reißverschluß befestigte Band durchschneiden und durch ein neues ersetzen.

Aus WO 93 12513 A geht ein banderoleartiger Sicherheitsverschluss hervor, der einen Chip in einem ersten Abschnitt und eine Antenne in einem zweiten Abschnitt sowie ein Verbindungselement aufweist, das eine Schleife bildet, wenn die beiden Abschnitte aneinandergeklebt werden. Aus US 3 662 480 ist ein bedrucktes Skiticket bekannt, bei dem ein Bügel zwischen zwei aneinandergeklebten, zusammengefalteten Abschnitten aus Papier befestigt ist.

Aufgabe der Erfindung ist es daher, einen einfach aufgebauten, nicht übertragbaren berührungslos arbeitenden Berechtigungsausweis mit einer wesentlich verbesserten Sicherheit gegen Mißbrauch bereitzustellen.

Dies wird erfindungsgemäß mit dem im Anspruch 1 gekennzeichneten Berechtigungsausweis erreicht. In den Unteransprüchen sind vorteilhafte Ausgestaltungen des erfindungsgemäßen Berechtigungsausweises wiedergegeben.

Bei dem erfindungsgemäßen Berechtigungsausweis liegt der Chip mit der Antenne in der aneinander geklebten Fläche zwischen den beiden Abschnitten des Berechtigungsausweises, wobei das Verbindungselement aus einer Schleife besteht, deren Enden in die aneinander geklebte Fläche zwischen den beiden Abschnitten eingeklebt sind.

Das heißt, die Befestigung des Berechtigungsausweises an der Kleidung der berechtigten Person erfolgt dadurch, dass das offene Band oder sonstige Verbindungselement, aus dem die Schleife gebildet wird, z. B. durch die Öse eines Reißverschlußschiebers der berechtigten. Person gesteckt wird, dann die beiden Abschnitte mit dem Chip und der Antenne dazwischen zusammengeklebt und dabei die beiden Enden des Verbindungselements zwischen den beiden Abschnitten miteingeklebt werden.

Die Schleife ist damit fest in dem Klebstoff an der miteinander verbundenen Fläche der beiden Abschnitte verankert. Ein Mißbrauch durch Personen, die im Besitz solcher Verbindungselemente sind und beabsichtigen, das eingeklebte Verbindungselement abzuschneiden, vom Berechtigungsausweis zu entfernen und mit einem neuen Verbindungselement an der Kleidung einer nicht berechtigten Person zu befestigen, wird damit praktisch ausgeschlossen.

Wird nämlich versucht, die beiden Abschnitte auseinanderzuziehen, um dadurch die mit ihren Enden dazwischen eingeklebte Schleife zu entfernen, wird die Antenne zerstört und/oder vom Chip abgerissen, da die Antenne und/oder der Chip nach dem Zusammenkleben an beiden Abschnitten befestigt sind.

Dazu kann der Chip mit der Antenne an einem der beiden Abschnitte angebracht sein, während der andere Abschnitt die mit dem Klebstoff versehene Fläche aufweist. Es ist jedoch auch möglich, beide oder nur den mit dem Chip und der Antenne versehenen Abschnitt mit einer Klebstofffläche zu versehen, die sich wenigstens über einen Teil der Antenne und/oder den Chip erstreckt.

Vorzugsweise verläuft dann die Schleife mit ihren Endbereichen quer über die Antenne bzw. wenigstens einer ihrer Windungen, ist also auch darauf angeklebt. Wenn versucht wird, ein Ende der Schleife herauszuziehen, wird damit die an das Schleifenende angeklebte Antenne zerstört.

Erfindungsgemäß wird damit ein einfach aufgebauter Datenträger zur berührungslosen Kontrolle von Personen mit einer nichtübertragbaren Beschichtung zur Inanspruchnahme einer Leistung bereitgestellt, der "handfree" mit einer Schreib- bzw. Leseeinrichtung beispielsweise einer Zugangskontrolleinrichtung z. B. von Skiliften und Seilbahnanlagen zusammenarbeitet.

Der Berechtigungsausweis ist vorzugsweise kartenförmig ausgebildet. Die beiden Abschnitte können beispielsweise aus Papier, Karton, einer Folie oder einem anderen flächigen Material bestehen.

Wenn wenigstens einer der beiden Abschnitte des Berechtigungsausweises zumindest in dem Bereich, an dem die Schleife angeklebt ist, transparent ausgebildet ist, können Manipulationen der Schleife in diesem Bereich bei einer Kontrolle sichtbar gemacht werden.

Die mit Klebstoff versehene Fläche kann sich über die gesamte Fläche eines oder beider Abschnitte erstrecken, jedenfalls muß ein Teil der Berührungsfläche zwischen den beiden Abschnitten mit Klebstoff versehen sein, und zwar im Bereich der Chips und/oder wenigstens eines Teils der Antenne.

Die Schleife kann ein Band, eine Schnur, ein Filament oder dgl. längliches Verbindungselement sein, das durch eine an der Kleidung vorhandene Öse oder dgl. Öffnung, also beispielsweise die Öse in der Lasche an einem Reißverschlußschieber, ein Knopfloch, eine an der Kleidung befestigte Schlaufe, durch die Maschen eines Pullovers oder dgl. Öffnung an der Kleidung hindurchgesteckt werden kann.

Wenn das Verbindungselement außerhalb des Berechtigungsausweises aufgeschnitten und dann zur Befestigung an der Kleidung der nicht berechtigten Person wieder verbunden wird, beispielsweise mit einem Klebeband, ist dies meist sichtbar und dadurch leicht kontrollierbar.

Um das Durchschneiden zu verhindern, kann jedoch von vorne herein eine Schleife aus einem Material hoher Festigkeit verwendet werden, also z. B. statt einem flexiblen Verbindungselement, wie einem Band, ein steifes Verbindungselement, also ein Bügel oder dgl. Formteil, insbesondere aus Metall, beispielsweise Draht.

Die Antenne besteht vorzugsweise aus mehreren spiralförmig angeordneten Windungen. Sie kann beispielsweise durch Drukken, Ätzen oder Stanzen hergestellt sein. Sie kann auch aus Draht bestehen, der an dem Chip angebonded ist. Damit wird beim gewaltsamen Auseinanderziehen der beiden Abschnitte der Draht vom Chip abgerissen.

Wenn die Schleife aus einem Bügel besteht, kann wenigstens ein Bügelende so gebogen und eingeklebt sein, dass es die Windungen der Antenne hintergreift, sodass sie beim Versuch, den Bügel gewaltsam aus dem Ausweis zu ziehen, zerstört wird.

Der Berechtigungsausweis kann beispielsweise mit Gültigkeitsdaten bedruckt sein; ist aber auch ohne aufgedruckte Gültigkeitsdaten vorteilhaft, da dann bei einem illegalen Verkauf des Ausweises der Käufer keine Möglichkeit hat, zu überprüfen, ob der ihm illegal angebotene Ausweis überhaupt noch gültig ist.

Die beiden Abschnitte, die den Ausweis bilden, bestehen vorzugsweise aus einem Teil, das im mittleren Bereich eine Faltlinie aufweist. Damit wird der Ausweis durch Zusammenfalten des Teiles und anschließendes Verkleben der beiden Hälften bzw. Abschnitte gebildet.

Die Schleife bzw. der Bügel kann im Bereich der Faltlinie oder am gegenüberliegenden Ende des Berechtigungsausweises eingeklebt sein. Das heißt, die Faltlinie kann bei an der Kleidung befestigtem Berechtigungsausweis an der oberen oder der unteren Kante des Berechtigungsausweises verlaufen. Die Ausführungsform, bei der die Faltlinie an der unteren Kante verläuft, ist beispielsweise vorteilhaft, wenn ein Bügel unter Vorspannung eingeklebt wird. Beim Durchtrennen des Bügels außerhalb des Berechtigungsausweises ziehen nämlich dann die auf der Antenne aufgeklebten Bereiche des Bügels an der Antenne, wodurch diese zerstört wird.

Die Klebstofffläche auf der Innenseite des einen oder beider Abschnitte des erfindungsgemäßen Berechtigungsausweises kann mit einer Schutzfolie oder dgl. Abdeckung versehen sein, die vor dem Zusammenkleben der beiden Abschnitte und bei zwei durch eine Faltlinie miteinander verbundenen Abschnitten vor dem Zusammenfalten abgezogen oder in anderer Weise entfernt wird.

Die Handhabung und der Einsatz des erfindungsgemäßen Berechtigungsausweises wird wesentlich dadurch vereinfacht, dass ein Träger verwendet wird, der aus einer Vielzahl von durch Solltrennlinien abtrennbaren Feldern besteht, wobei auf jedem Feld die beiden Abschnitte eines Berechtigungsausweises aufgeklebt sind. Nach dem Abtrennen eines Feldes mit den beiden Abschnitten des Berechtigungsausweises bildet dann der Träger die Schutzabdeckung.

Der Träger kann aus Papier, Karton, einer Folie oder einem anderen flächigem Material bestehen. Die Solltrennstellen können beispielsweise durch eine Perforation gebildet sein.

Vorzugsweise wird der Träger durch einen Streifen mit quer verlaufenden Solltrennstellen gebildet. Der Träger kann dann beispielsweise zu einer Rolle aufgewickelt oder als Stapel zusammengefaltet werden.

Nachstehend ist die Erfindung anhand der Zeichnung beispielhaft näher erläutert. Darin zeigen
Figur 1 die Draufsicht auf eine Ausführungsform eines erfindungsgemäßen Berechtigungsausweises;
Figur 2 einen Längsschnitt durch den Berechtigungsausweis nach Figur 1 entlang der Linie II-II, wobei die einzelnen Schichten zur besseren Veranschaulichung übertrieben dick dargestellt sind;
Figur 3 eine Draufsicht auf den Berechtigungsausweis nach Figur 1 vor dem Zusammenfalten und Einkleben des Bügels;
Figur 4 schematisch die Ansicht auf einen Träger, auf den die aufgefalteten Berechtigungsausweise hintereinander aufgeklebt sind;
Figur 5 die Draufsicht auf die Innenseite eines der beiden Abschnitte einer anderen Ausführungsform des Berechtigungsausweises; und
Figur 6 die Draufsicht auf die Innenseite eines der beiden Abschnitte wieder einer anderen Ausführungsform des Berechtigungsausweises.

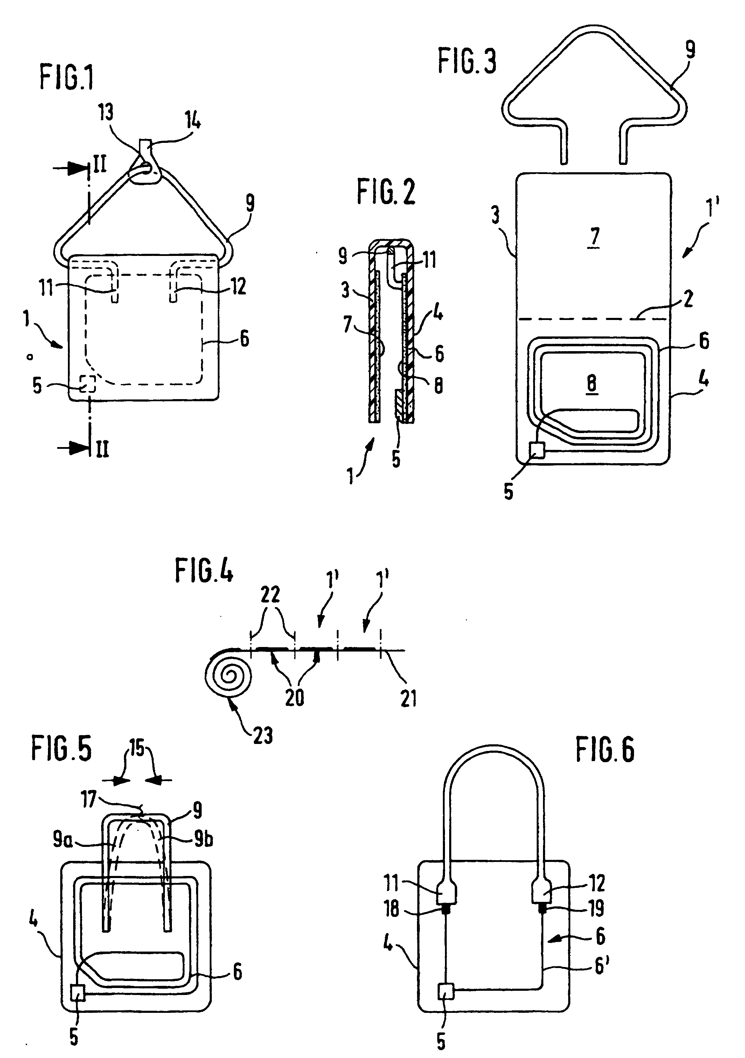

Gemäß Figur 3 besteht der Berechtigungsausweis 1' vor dem Zusammenfalten aus zwei Abschnitten 3, 4, die durch eine Faltlinie 2 getrennt sind. Die beiden Abschnitte 3, 4 werden damit durch ein Teil oder Blatt beispielsweise aus einer Kunststofffolie gebildet.

Auf dem einen Abschnitt 4 ist ein berührungslos les- und beschreibbarer Mikrochip 5 und eine an den Mikrochip 5 angeschlossene Antenne 6 befestigt, welche aus einer Leiterbahn besteht, die spiralförmig mehrere Windungen bildet und auf dem Abschnitt 4 beispielsweise mit einem Druckverfahren aufgebracht sein kann.

Die Abschnitte 3, 4 weisen an der Innenseite jeweils eine Klebstoffschicht 7, 8 auf, sodass bei dem Berechtigungsausweis 1 nach dem Zusammenfalten gemäß Figur 1 und 2 beide Abschnitte 3, 4 fest aneinander kleben. Die Klebstoffschicht 8 des Abschnitts 4 kann auch die Antenne 6 und ggf. den Chip 5 bedecken.

Um die Berechtigungskarte 1 an der Kleidung des Benutzers befestigen zu können, ist eine Schleife oder ein Bügel 9 vorgesehen, der mit seinen in Figur 1 gestrichelt dargestellten Endabschnitten 11, 12 zwischen den Klebstoffschichten 7, 8 der beiden Abschnitte 3, 4 eingeklebt ist.

Vor dem Zusammenkleben der beiden Abschnitte 3, 4 ist der Bügel 9 durch die Öse 13 in der Lasche 14 eines nicht dargestellten Reißverschlußschiebers an der Kleidung des Benutzers gesteckt worden.

Die Endabschnitte 11, 12 des Bügels 9 sind so abgewinkelt, dass sie die Antenne 6 kreuzen (Figur 1) und dadurch in diesem Bereich an die Antenne 6 angeklebt sind. Zudem sind, wie in Figur 2 zu sehen, die Endabschnitte 11, 12 an ihren Enden so gekrümmt, dass sie die Antenne 6 hintergreifen. Wenn versucht wird, den Bügel 9 aus dem Berechtigungsausweis zu ziehen, wird damit die Antenne 8 zerstört, also der Ausweis 1 funktionsunfähig.

Die Ausführungsform nach Figur 5 unterscheidet sich von der nach Figur 1 und 2 im wesentlichen dadurch, dass zwischen die beiden Abschnitte, von denen in Figur 5 nur der Abschnitt 4 dargestellt ist, ein Bügel 9 so eingeklemmt wird, dass er, wie durch die Pfeile 15 veranschaulicht, unter Vorspannung steht. Der Bügel 9 ist an die Antenne 6 angeklebt. Wenn der Bügel 9 z. B. bei 17 durchtrennt wird, bewegen sich damit die beiden Teile des Bügels 9 entsprechend den Pfeilen 15 in die gestrichelt dargestellte Position 9a, 9b und zwar auch im Bereich der Antenne 6, wodurch diese zerstört wird. Während bei der Ausführungsform nach Figur 1 und 2 die Faltlinie 2 oben angeordnet ist, ist sie bei der Ausführungsform nach Figur 5 unten angeordnet.

Gleiches gilt für die Ausführungsform nach Figur 6, die sich im übrigen von den Ausführungsformen und Figuren 1 bis 3 und Figur 5 dadurch unterscheidet, dass der Chip 5 nur mit dem Teil 6' der Antenne 6 an dem Abschnitt 4 befestigt ist, während die Schleife bzw. der Bügel 9 das andere Antennenteil bildet. Die beiden Endabschnitte 11, 12 des Bügels 9 sind dabei so ausgebildet und so angeordnet, dass sie in dem zusammengeklebten Ausweis 1 die beiden Endabschnitte 18, 19 des Antennenteils 6' kontaktieren.

Die Klebeflächen 7, 8 sind bei dem in Figur 3 dargestellten aufgeklappten Blatt 1' mit einer Schutzabdeckung, z. B. aus Papier versehen.

Gemäß Figur 4 kann die Schutzabdeckung durch die Felder 20 eines streifenförmigen Trägers 21 gebildet sein, auf den die Blätter 1' hintereinander mit ihren Klebstoffflächen 7, 8 aufgeklebt sind. Die Felder 20 sind durch quer verlaufende Solltrennlinien 22 voneinander getrennt. Der streifenförmige Träger 21 kann mit den darauf geklebten Blättern 1' beispielsweise von einer Vorratsrolle 23 abgewickelt oder beispielsweise zu einem Vorratsstapel gefaltet sein.

## Patentansprüche

1. Nicht übertragbarer Berechtigungsausweis (1) mit einem berührungslos les- und beschreibbaren Chip (5) mit einer Antenne (6) und einem Verbindungselement, das durch eine Öse (13) oder dergleichen Öffnung an der Kleidung des berechtigten Benutzers schiebbar und nur durch Zerstörung lösbar befestigbar ist, **dadurch gekennzeichnet, dass** der Berechtigungsausweis (1) aus zwei flächig aneinanderklebbaren Abschnitten (3, 4) besteht, der Chip (5) mit der Antenne (6) wenigstens teilweise in der aneinandergeklebten Fläche der beiden Abschnitte (3, 4) angeordnet ist und das Verbindungselement durch eine Schleife (9) gebildet wird, deren Endabschnitte (11, 12) beim Anbringen des Berechtigungsausweises in der aneinandergeklebten Fläche der beiden Abschnitte (3, 4) angeordnet werden und nach Verkleben der Abschnitte (3, 4) zwischen diesen fest angeordnet sind, wobei die Schleife (9) mit wenigstens einem Ende die Antenne (6) übergreift, so dass bei Entfernung der Schleife (9) die Antenne (6) zerstört und/oder vom Chip abgerissen wird.

2. Berechtigungsausweis nach Anspruch 1, **dadurch gekennzeichnet, dass** der Chip (5) mit der Antenne (6) an wenigstens einer der beiden Abschnitte (3, 4) befestigt ist und die beiden Abschnitte (3, 4) dadurch aneinander geklebt sind, dass wenigstens ein Abschnitt (3, 4) mit einer Klebstoffschicht (7, 8) versehen ist.

3. Berechtigungsausweis nach einem der vorhergehenden Ansprüche, **dadurch gekennzeichnet, dass** die beiden Abschnitte (3, 4) entlang einer Faltlinie (2) einstückig miteinander verbunden sind.

4. Berechtigungsausweis nach einem der vorhergehenden Ansprüche, **dadurch gekennzeichnet, dass** die Klebstoffschicht (7, 8) vor dem Zusammenkleben der beiden Abschnitte (3, 4) mit einer entfernbaren Schutzabdeckung versehen ist.

5. Berechtigungsausweis nach einem der vorhergehenden Ansprüche, **dadurch gekennzeichnet, dass** der Abschnitt (4), an dem der Chip (5) und die Antenne (6) befestigt sind, zumindest im Bereich des Chips (5) und/oder der Antenne (6) eine Klebstoffschicht (8) aufweist und die Schleife (9) mit wenigstens einem ihrer Endabschnitte (11, 12) durch die Klebstoffschicht (8) an den Chip (5) und/oder die Antenne (6) angeklebt ist.

6. Berechtigungsausweis nach einem der vorhergehenden Ansprüche, **dadurch gekennzeichnet, dass** die Schleife (9) als Bügel ausgebildet ist.

7. Berechtigungsausweis nach Anspruch 6, **dadurch gekennzeichnet, dass** der Bügel (9) unter Vorspannung steht.

8. Berechtigungsausweis nach einem der Ansprüche 1 bis 6, **dadurch gekennzeichnet, dass** der Chip (5) mit einem Teil (6') der Antenne (6) an wenigstens einem der beiden Abschnitte (3, 4) befestigt ist, die Schleife (9) den anderen Teil der Antenne (6) bildet und die Endabschnitte (11, 12) der Schleife (9) die Endabschnitte (18, 19) des Antennenteils (9') in der aneinandergeklebten Fläche der beiden Abschnitte (3, 4) kontaktieren.

9. Berechtigungsausweis nach einem der vorhergehenden Ansprüche, **dadurch gekennzeichnet, dass** wenigstens einer der beiden Abschnitte (3, 4) zumindest teilweise transparent ausgebildet ist.

10. Vorrichtung zur Herstellung von Berechtigungsausweisen nach Anspruch 4, **dadurch gekennzeichnet, dass** ein Träger (21) vorgesehen ist, der aus einer Vielzahl von durch Solltrennstellen (22) abtrennbaren Feldern (20) besteht, auf jedes Feld (20) die beiden Abschnitte (3, 4) eines Berechtigungsausweises (1) aufgeklebt sind und das Feld (20) nach dem Abtrennen die Schutzabdeckung bildet.

11. Vorrichtung nach Anspruch 10, **dadurch gekennzeichnet, dass** der Träger (21) durch einen Streifen mit quer verlaufenden Solltrennstellen (22) gebildet wird.

## Claims

1. Non-transferable entitlement identity card (1) with a contact-free readable and writable chip (5) with an antenna (6) and a connection element, which is capable of being pushed through an eye (13) or similar aperture on the clothing of the entitled user, and is capable of being secured in such a manner that it can only be detached by destroying it, **characterised in that** the identity card (1) consists of two sections (3,4) capable of being adhesively bonded to one another by their surfaces, the chip (5) with the antenna (6) is arranged at least in part in the surfaces of the two sections (3,4) which are bonded to one another, and the connection element is formed by a loop (9), of which the end sections (10,11) are arranged in the surfaces to be bonded together of the two sections (3,4) when the identity card (1) is assembled, and, after the bonding of the sections (3,4) are fixedly arranged between them, wherein the loop (9) engages with at least one end over the antenna (6) so that the antenna (6) is destroyed and/or torn from the chip (5) when the loop (9) is removed.

2. Entitlement identity card according to Claim 1, **characterised in that** the chip (5) with the antenna (6) is secured to at least one of the two sections (3,4), and at least one section (3,4) is provided with an adhesive layer (7,8) for bonding the two sections (3,4) together.

3. Entitlement identity card according to one of the foregoing claims, **characterised in that** the two sections (3,4) are connected to each other as one piece along a fold line (2).

4. Entitlement identity card according to one of the foregoing claims, **characterised in that** the adhesive layer (7,8) is provided with a removable protective covering before the two sections (3,4) are bonded together.

5. Entitlement identity card according to one of the foregoing claims, **characterised in that** the section (4), to which the chip (5) and the antenna (6) are secured, has an adhesive layer (8) at least in the area of the chip (5) and/or the antenna (6), and the loop (9) is bonded with at least one of its end sections (11,12) by the adhesive layer (8) to the chip (5) and/or the antenna (6).

6. Entitlement identity card according to one of the foregoing claims, **characterised in that** the loop (9) is formed as a bar.

7. Entitlement identity card according to Claims 6, **characterised in that** the bar (9) is under preliminary tension.

8. Entitlement identity card according to one of Claims 1 to 6, **characterised in that** the chip (5) is secured to a part (6') of the antenna (6) at at least one of the two sections (3,4), the loop (9) forms the other part of the antenna (6), and the end sections (11,12) of the loop (9) are in contact with the end sections (18,19) of the antenna part (9') in the surfaces bonded to one another of the two sections (3,4).

9. Entitlement identity card according to one of the foregoing claims, **characterised in that** at least one of the two sections (3,4) is designed to be at least partially transparent.

10. Apparatus for making entitlement identity cards according to claim 4, **characterized in that** a carrier (21) is provided, which consists of a multiplicity of fields (20) capable of being separated by predetermined separation points (22), the two sections (3,4) of an entitlement identity card (1) are bonded onto each field (20), and the field (20) forms the protective covering after the separation.

11. Apparatus according to claim 10, **characterized in that** the carrier (21) is formed by a strip with transverse predetermined separation points (22).

## Revendications

1. Carte d'autorisation (1) non transmissible, comportant une puce susceptible d'être lue et écrite sans contact, avec une antenne (6) et un élément de liaison que l'on peut faire passer à travers d'un oeillet (13) ou d'une ouverture similaire sur le vêtement d'un utilisateur autorisé et qui peut être fixée de manière détachable seulement par destruction, **caractérisée en ce que** la carte d'autorisation (1) est constituée par deux tronçons (3, 4) qui peuvent être collés à plat l'un sur l'autre, **en ce que** la puce (5) avec l'antenne (6) est agencée au moins partiellement dans la surface collée des deux tronçons (3, 4), et **en ce que** l'élément de liaison est formé par une boucle (9) dont les tronçons d'extrémité (11, 12) sont placés dans la surface collée des deux tronçons (3, 4) lorsque la carte d'autorisation est attachée et sont collés fermement entre les deux tronçons (3, 4) après avoir collé ceux-ci, la boucle (9) recouvrant l'antenne (6) avec au moins une extrémité, de sorte que lorsqu'on enlève la boucle (9), l'antenne (6) est détruite et/ou arrachée de la puce.

2. Carte d'autorisation selon la revendication 1, **caractérisée en ce que** la puce (5) avec l'antenne (6) est fixée sur au moins un des deux tronçons (3, 4) et **en ce que** les deux tronçons (3, 4) sont collés l'un à l'autre par le fait qu'au moins un tronçon (3, 4) est pourvu d'une couche de colle (7, 8).

3. Carte d'autorisation selon l'une des revendications précédentes, **caractérisée en ce que** les deux tronçons (3, 4) sont reliés l'un à l'autre d'un seul tenant le long d'une ligne de pliage (2).

4. Carte d'autorisation selon l'une des revendications précédentes, **caractérisée en ce qu'**avant d'assembler les deux tronçons (3, 4) par collage, la couche de colle (7, 8) est pourvue d'un revêtement de protection amovible.

5. Carte d'autorisation selon l'une des revendications précédentes, **caractérisée en ce que** le tronçon (4) sur lequel sont fixées la puce (5) et l'antenne (6), présente au moins dans la zone de la puce (5) et/ou de l'antenne (6) une couche de colle (8), et **en ce que** la boucle est collée avec au moins un de ses tronçons d'extrémité (11, 12) par la couche de colle (8) sur la puce (5) et/ou sur l'antenne (6).

6. Carte d'autorisation selon l'une des revendications précédentes, **caractérisée en ce que** la boucle (9) est réalisée sous forme d'étrier.

7. Carte d'autorisation selon la revendication 6, **caractérisée en ce que** l'étrier (9) est sous précontrainte.

8. Carte d'autorisation selon l'une des revendications 1 à 6, **caractérisée en ce que** la puce (5) est fixée avec une partie (6') de l'antenne (6) sur au moins un des deux tronçons (3, 4), **en ce que** la boucle (9) forme l'autre partie de l'antenne (6), et **en ce que** les tronçons d'extrémité (11, 12) de la boucle (9) contactent les tronçons d'extrémité (18, 19) de la partie d'antenne (9') dans la surface collée des deux tronçons (3, 4).

9. Carte d'autorisation selon l'une des revendications précédentes, **caractérisée en ce qu'**au moins un des deux tronçons (3, 4) est réalisé au moins partiellement transparent.

10. Dispositif de fabrication de cartes d'autorisation selon la revendication 4, **caractérisé en ce qu'**il est prévu un support qui est constitué par une multitude de zones (20) séparables par des points destinés à la rupture (22), **en ce que** sur chaque zone (20) sont collés les deux tronçons (3, 4) d'une carte d'autorisation (1) et **en ce que** la zone (20) forme le recouvrement de protection après la séparation.

11. Dispositif selon la revendication 10, **caractérisé en ce que** le support (21) est formé par une bande avec des points destinés à la rupture (22) s'étendant transversalement.
